# EUROPEAN PATENT SPECIFICATION

(11) **EP 0 949 068 B1**
(45) Date of publication and mention of the grant of the patent: **27.12.2006**
(21) Application number: 99610027.7
(22) Date of filing: 07.04.1999
(51) Int. Cl.: B32B 43/00, B29B 17/02, F16L 9/147

(54) **Separation of insulated pipes**
Verfahren und Vorrichtung zum voneinander Abtrennen der Schichten von isolierten Röhren
Séparation des couches de tuyaux isolés

(30) Priority: 08.04.1998 DK 051398
(43) Date of publication of application: 13.10.1999
(73) Proprietor: Den Nyttige Krukke A/S, 3400 Hillerod (DK)
(72) Inventor: Erling, Gorges, 4000 Roskilde (DK); Frederiksen, Jorgen, 3400 Hillerod (DK)
(74) Representative: Plougmann & Vingtoft A/S

(56) References cited:
- EP-A- 0 397 971
- EP-A- 0 425 800
- DE-A- 4 133 592
- US-A- 5 445 331

## Description

The invention concerns an automated method and an apparatus for separation of pipes comprising a inner tube and an outer layer by pressing the pipe into deformation. The same apparatus may be used for pipes of different diameters as well as bend pipes.

The invention concerns in particular a method and an apparatus for separation of pipes of which the outer layer is made from a foamed material comprising CFC gasses, especially R11 and R12. A substantial part of the CFC gasses is released during the pressing process and is removed by suction and captured in a filtering means adapted for absorbing CFC gasses.

### Background

The different layers of pre-isolated pipes that e.g. have been used for distribution of district heating, need to be separated from each other before recycling of and/or disposal of the materials that the pipes comprise. The pipes in question comprise an inner tube, usually made from a metal such as steel and one or more outer layers of which at least one is an isolating layer, usually made from a foamed material, and optionally a sheath, usually made from a hard plastic material such as polyvinyl chloride polymer (PVC) or high density polyethylene (hd-PE).

The pipes and/or the inner tubes may have any cross-sectional shape such as round, square, triangular, oval, etc., but the most common shape is round.

Disposing of pipes that are isolated with a foamed material is a particular problem since the foamed material and the outer sheath often are made from materials of high combustibility, such as polyurethane, and it will therefore in the near future almost certainly become very difficult to obtain permission to dispose the pipes on dumping grounds in most countries.

The foamed material may involve a problem when the components of the pipes are separated. The most common foaming agent that was used until about 1990 is CFC gasses, known as R11 and R12. These gasses are contained within the foam and tests show that a large part of the gasses will be released during a separation process. This presents a problem for separation processes, since the release of CFC gasses to the atmosphere is unwanted for environmental reasons.

Another problem for the process of separating pipes is that the pipes often have bends and/or dents due to the installation they have formed part of, or due to the dismantling process. Furthermore, the pipes are often connected to T-pieces, elbows, muffs and/or expansion joints, that are time-consuming to remove manually from the pipes. Therefore, the method and apparatus for the separating process have to be flexible to the shape of the pipes. Further, the pipes to be disposed are often of different diameters, both with regard to the outer diameter of the pipe and the diameter of the inner tube for which reason it is highly desirable for a method and an apparatus for separation of pipes that they are flexible to these parameters.

The pipes to be separated comes in different length and a method and an apparatus for separation of pipes should preferably be able to handle pipes of various lengths.

Known separation methods comprises manual separation where the isolating layer is scraped from the inner tube manually. Manual separation is mostly used when the inner tube is being reused and the method is highly labour-consuming. Another method is shredding in which the pipe is broken down into small pieces that subsequently are sorted but it is very difficult to prevent released gasses from entering the atmosphere in this process. A third known method is to force the pipe by hydraulic means through a die that fits with the outer surface of inner tube so that the outer layer is scraped from the inner tube. A special die have to be supplied for each diameter of the inner tubes and the method can only be applied to substantially straight pipes without bends or dents. The third known method may only for practical reasons be applied to pipes with a maximum length of approximately three meters.

### Description of the invention

It is an object of the invention to provide an automated method and an apparatus for separation of isolated pipes that may be applied to pipes of diameters within a broad range and to pipes with bends or dents and/or T-pieces etc., without adjustment or modification of the method and apparatus.

It is a further object of the invention to provide a method and an apparatus which includes steps and means for removal of gasses, such as, e.g., CFC gasses, that may be released during the separation process, from the region where the separation process takes place.

It is a still further object of the invention to provide a method and an apparatus which includes means and steps for capturing of gasses, such as, e.g., CFC gasses, that have been removed from the region where the separation process takes place.

It is a still further object of the invention to provide a method and an apparatus that is adapted for handling pipes of various lengths.

It is a still further object of the invention to provide a method and an apparatus with means and steps adapted for loosening parts of the outer layer that still may stick to the inner tube after the primary separation process and/or means and steps for separating parts of the outer layer that still may stick to the sheath material after the primary separation process.

The invention concerns a method of separating a pipe comprising an inner tube and at least one outer layer comprising the steps specified in Claim 1.

The mechanical properties of the inner tube may be that it is made from a plastically deformable material, such as one of a number of steel alloys, and may be pressed into a substantially flat member whereas the outer layer may be made from a hard and brittle material, such as polyurethane, that will break into pieces during the pressing process. If the outer layer comprises a foamed material, then most of the cells of this foamed material will break during the pressing process and the gas that have been used as a blowing agent and is comprised within the cells are released from the foamed material as the foamed material is crushed during the pressing step.

Preferably, the method is applied to pipes wherein the inner tube is a metal tube, such as a steel tube.

In the invention, the inner tube is in the pressing step permanently deformed into a substantially flat member. The required pressing force depends on the type and diameter of the tube and of the length of the tube positioned between the pressing surfaces. This length may be from 0.25 meter to 3 or 4 meters, preferably between 0.5 and 2 meters and most preferred between 1 and 1.5 meters. The applied pressing force is for a length of tube of 1 to 1.5 meters from 400 to 900 kN (kilo Newton), preferably from 600-700 kN.

The process may, for tubes having a hard sheath, prior to the pressing step comprise a step in which the sheath is opened with one, two or more longitudinal cuts so as to ease the pressing process, allow gasses to escape from the foam and the ease the separation of the sheath part from the pipe and foam parts after the pressing process. The cuts may be applied manually or automatically by means of knives, circular saws, etc.

The method according to the invention comprises the step of
applying suction to the region where the separation process is performed so as to remove a substantial part of gasses that are released during the process.

Furthermore, the air that is sucked from the region where the separation process is performed is in a preferred embodiment according to the invention passed through a filtering means so as to capture a substantial part of the gasses, that are released from the process and which are removed by suction, in the filtering means, so as to prevent the gasses from contaminating the environment.

The method according to the invention, subsequently to the pressing step comprises the steps of
moving the pressing surfaces away from each other so as to release the pipe from the pressing surfaces,
moving the parts of the pipe that have been pressed away from the pressing surfaces,
placing the pipe in cutting means, and
cutting the pipe so as to separate the parts of the pipe that have been pressed from the remaining part of the pipe.

The method may also according to the invention further comprise the step of
loosening remaining parts of the at least one outer layer of the pipe from the inner tube by applying loosening means to the pipe.

The loosening means may comprise two scrapers each comprising an edge and such loosening means are applied to the pipe by placing the edges of the scrapers on each side of the deformed inner tube abutting the flat tube sides where after the tube and the scrapers are moved relatively to each other.

Alternatively, the loosening means may comprise brushes that may be rotated and such loosening means are applied to the pipe by rotating the brushes while these are in contact with the part of the pipe that have been deformed so as to remove remaining parts of the at least one outer layer from the inner tube.

The method according to the invention may preferably be performed on pipes of which the outer layer of the pipe is at least partly made from a foamed material.

The foamed material may comprise polyurethane.

The foamed material may further comprise CFC gasses which have been used as blowing agent so that the gasses that may be released during the separation process comprises CFC gasses.

The invention also concerns an apparatus for separating pipes comprising an inner tube and at least one outer layer according to the process of Claim 1, the apparatus comprises
a first pressing member having a first pressing surface,
a second pressing member having a second pressing surface, the first and the second pressing surfaces being arranged during the separation process so that they substantially are facing each other,
means adapted for moving the pressing members towards each other with a force of such a magnitude that a pipe placed between the pressing surfaces may be permanently deformed, and
suction means for removing a substantial part of the gasses that may be released during the separation process from the region around the pressing surfaces, and cutting means suitable for separating a pressed part of a pipe from a non-pressed part of a pipe.
The first and second pressing member are preferably of such a rigid construction that the pressing surfaces are only slightly deformed during the pressing process. The pressing surfaces may be of various shapes so that the apparatus is suitable for treating objects of various shapes and sizes and with bends and dents. The pressing surfaces are in a preferred embodiment of the invention substantially flat and parallel to each other, at least during the pressing process.

It is understood that the pressing surfaces may be oriented in any direction during the pressing process, horizontally, vertically or in between. Preferably, the pressing surfaces are substantially horizontal, so that the tube may be supported by the lower of the surfaces before the pressing process. However, tilted or vertical surfaces have the advantage that debris from the pressing process may be removed from between the pressing surfaces by the force of gravity.

The means for moving at least one of the pressing members towards the other pressing member or for moving both pressing members towards each other may be any suitable mechanical means such as hydraulic pistons, pneumatic piston, spindles, etc.

The suction means may be one or more ventilators, air pumps, blowers, etc.

The apparatus may further according to the invention comprise a filtering means connected to the outlet of the suction means, the filtering means being suitable for capturing a substantial part of the gasses that may be released during the separation process. The filtering means may be a activated charcoal filter or another suitable filter or it may comprise means for condensing the gasses.

The filtering means are in a preferred embodiment of the invention suitable for capturing CFC gasses.

The apparatus comprises in a further preferred embodiment according to the invention a housing enclosing the pressing members and to which the intake of the suction means is connected so as to increase the efficiency of the process of removing a substantial part of the gasses, that may be released during the separation process from the region around the pressing surfaces.

The apparatus may also in a preferred embodiment of the invention comprise feeding means adapted for automatically feeding the pipe in between the pressing surfaces. The feeding means may be a conveyor with an endless belt or chain that engages the pipe, it may comprise a number of cylinders or balls on which the pipe rolls and drive means for driving the pipe towards the separation region, etc.

The apparatus of the invention comprises cutting means suitable for separating a pressed part of a pipe from a non-pressed part of a pipe. The cutting means may comprise a part with a straight cutting edge and a part with an inclined cutting edge so that the only a part of the inclined cutting edge at a time is engaging the pipe.

The apparatus may according to the invention further comprise loosening means suitable for removing parts of the outer layer of the pipe from the inner tube after the pressing process.

The loosening means may comprise two scrapers each with an edge, means for placing the two scrapers one on each side of and abutting the pressed part of the inner tube and means for moving the scrapers and the inner tube relatively to each other.

Alternatively, the loosening means comprises brushes, means for rotating the brushes, means for placing the brushes on each side of the pressed part of the inner tube and means for moving the brushes and the inner tube relatively to each other.

### Brief description of figures

Fig. 1 shows a side view of an apparatus for separation of isolated pipes,
Fig. 2 is a top view sketch showing the principle of an apparatus for separation of isolated pipes,
Fig. 3 shows the knife for cutting the inner tubes, and
Fig. 4 shows the first and the second pressing members of the apparatus.

### Detailed description of figures

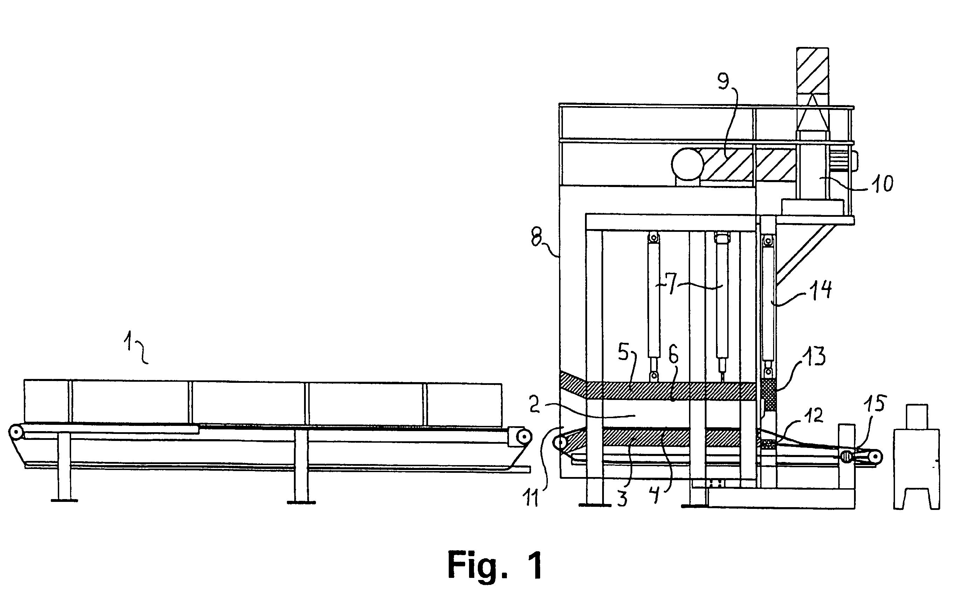

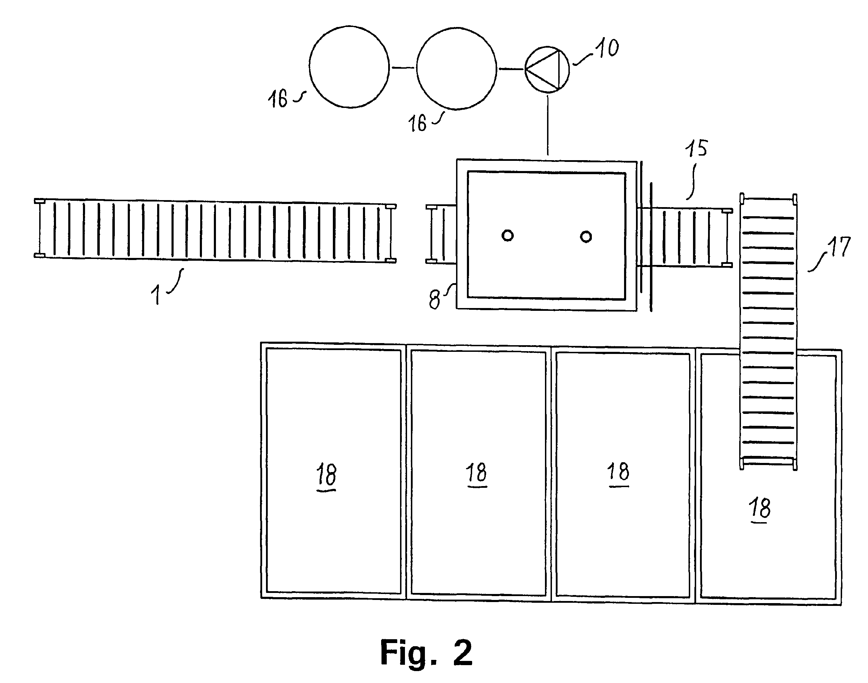

An embodiment of the apparatus according to the invention is shown in Figs. 1 and 2. The shown device comprises a conveyor unit 1 for feeding the pipes into the separation region 2. The conveyor unit 1 comprises an endless chain specially formed for engaging with and moving the pipes and a drive means for driving the endless chain. The apparatus further comprises a first, stationary pressing member 3 having a first pressing surface 4, a second, movable pressing member 5 having a second pressing surface 6 and means comprising hydraulic pistons 7 for moving the second pressing member 5. The first 3 and second 5 pressing members and the hydraulic pistons 7 are comprised within a housing 8 that is connected with a ventilation pipe 9 to a suction means comprising a ventilator 10, the ventilation pipe 9 being connected to the intake of the ventilator 10. The housing 8 is closed on the top and on the sides and is only provided with openings for entering 11 and exiting the pipes into and from the separation region 2. The function of the housing 8 is to enhance the efficiency of removing gasses being released during the separation process from the separation region 2 with the ventilator 10. The openings of the housing 8 allow air from the outside to entrain into the housing 8 and create an air stream in the separation region 2 and out through the ventilation pipe 9 and the ventilator 10 so that gasses released during the separation process are carried away or sucked from the separation region 2. The hydraulic pistons 7 apply a pressing force of 65 tonnes, equivalent to about 650 kN.

The shown embodiment of the invention is designed for pipes with a diameter of the inner tube of 200-800 mm and an outer diameter of the pipe with isolation and sheath of 300-1200 mm, in particular two types of pipes with diameters of the inner tube of 273 mm and 610 mm, respectively, and an outer diameter of 400 mm and 800 mm, respectively, the two types of pipes conforming to the Danish standards DN 250 and DN 608.

The ventilator 10 has a capacity of 1300 cubic meter air per hour, and the outlet of the ventilator 10 is connected to filtering means 16 comprising activated charcoal filters that are suitable for capturing a substantial part of CFC gasses that may be release during the separation process and are transported from the separation region 2 via the ventilator 10. The filtering means comprise two activated charcoal filters connected in series, each comprising 500 kg activated charcoal being able to absorb about 14 kg of CFC gasses.

The apparatus further comprises cutting means comprising a stationary first part 12, a movable second part 13 and means for moving the movable second part 13, said means comprising a hydraulic piston 14. The cutting means are placed adjacent to an opening of the housing 8 in substantially the same horizontal plane as the first pressing surface 4 opposite to the conveyor unit 1 so that the part of the pipe that have been pressed after the separation process may be moved out between the first part 12 and the second part 14 of the cutting means so that the cutting means may separate the pressed parts of the pipe from the non-pressed parts of the pipe.

The apparatus also comprises conveyors 15, 17 for transporting the separated parts of the pipes away from the separation region 2 and the cutting means 12, 13 to a sorting station where the parts are sorted into containing means 18 for metal parts from the inner tube, foamed material, sheath material and optionally other materials, respectively.

Optionally, the apparatus may also comprise loosening means for loosening remaining parts of the foamed material from the inner tube after the separation process. These loosening means may be placed inside the housing 8 in case the foamed material still contains gasses that may be released during the loosening process so that these gasses may be removed by means of the ventilator 10. The loosening means may comprise scrapers that are moved along each side of the inner tube that is substantially flat due to the pressing process. The scrapers may be two scraper members each having a scraping edge of at least the same width of the inner tube and adapted for scraping each one side of the inner tube. The scraper members may alternatively each comprise a multitude of spring-loaded fingers placed closely adjacent to each other, each finger having a scraping edge of a more narrow width that the inner tube so as to make the scrapers more flexible to unevenness of the inner tube.

The loosening means may in another embodiment of the invention comprise brushes that may be rotated by rotation means and are moved along the two sides of the inner tube so as to loosen parts of the foamed material that stick to the inner pipe. The brushes may rotate about axes that are substantially perpendicular to the plane of the flat inner tube or they may rotate about axes that are parallel to the plane of the flat inner tube.

Optionally, the apparatus may also comprise secondary separation means adapted for separating the foamed material from the sheath material to which it may stick after the separation process. This secondary separation process may be performed inside the housing 8 in case the foamed material still comprises gasses that may be released during the secondary separation process so that these gasses may be removed by the ventilator 10, or the process may be performed somewhere else, such as, e.g., at the sorting station.

The secondary separation means may comprise scrapers or brushes similarly to the loosening means. Preferably, the secondary separation means comprises two rotatable cylinders between which the sheath material is rolled so as to loosen the foamed material that may stick to the sheath material.

Preferably, most of or all parts of the apparatus are connected to earth with conductors so as to prevent static electricity on the parts. This arrangement is preferred since the foaming materials and optionally also the sheath materials often are highly inflammable for which reason the apparatus preferably also is equipped with fire fighting and/or fire extinguishing means such as powder extinguishers.

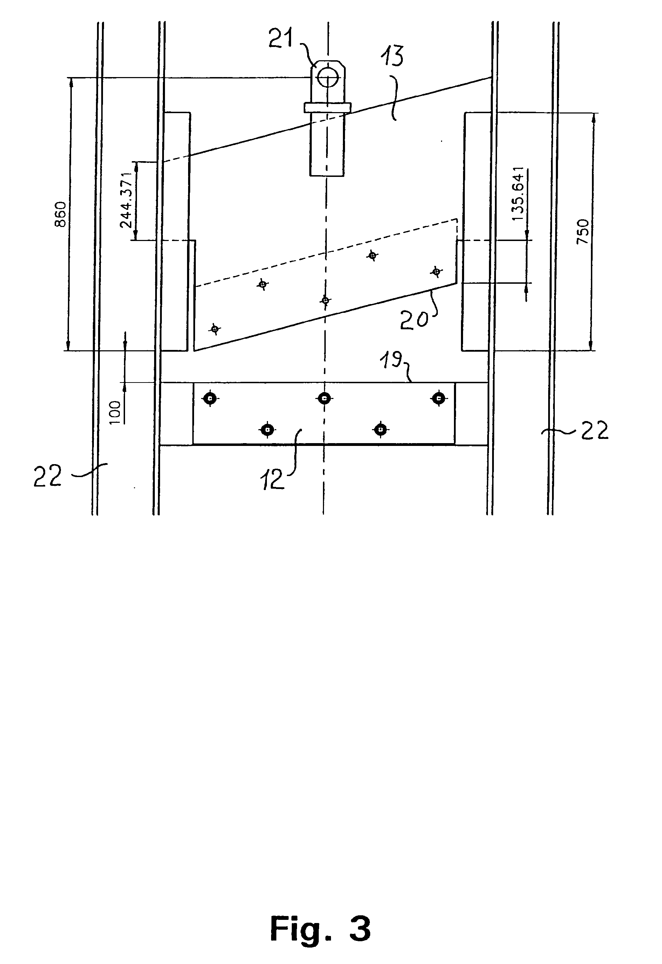

The cutting means are shown in Fig. 3. They comprise a stationary first part 12 with a first cutting edge 19, a movable second part 13 with a second cutting edge 20 and a hydraulic piston 14 for moving the movable second part 13. The first cutting edge 19 is substantially horizontal whereas the second cutting edge 20 is inclined so that only a part of the inclined cutting edge 20 at a time is engaging with the pipe so as to make the cutting process more efficient and to reduce the demand for cutting force delivered by the hydraulic piston 14. The movable second part 13 is equipped with means 21 for connecting the second part 13 to the hydraulic piston 14. The stationary first part 12 is mounted on vertical beams 22 that constitute a part of a frame. The movable second part 13 is slidably connected to the vertical beams 22.

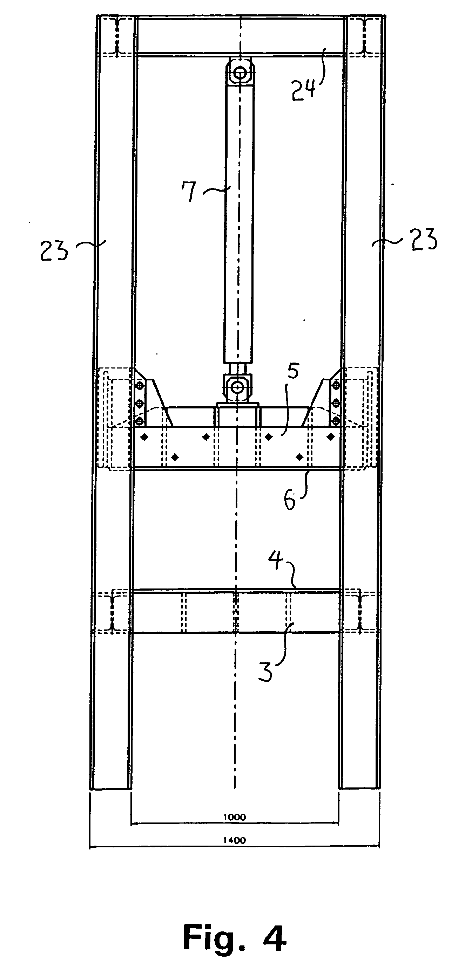

The pressing members are shown in Fig. 4. The first, stationary pressing member 3 has a first pressing surface 4 and the second, movable pressing member 5 has a second pressing surface 6. The stationary first pressing member 3 is mounted on vertical beams 23 that constitute a part of a frame. The movable second pressing member 5 is mounted slidably on the vertical beams 23 and is driven in the vertical direction by hydraulic pistons 7. The lower ends of the hydraulic pistons 7 are connected to the second pressing member 5 and the upper ends of the hydraulic pistons 7 are connected to a horizontal beam 24 that also constitutes a part of the frame.

The whole process of separating the pipes may be controlled manually, but the apparatus comprises in a preferred embodiment programmable control means for controlling the process, the control means comprising a programmable control part comprising a micro processor, a computer readable memory and a computer software program adapted for controlling the process, such as a Personal Computer with a suitable software program or a programmed PLC. The control means may further comprise a number of sensors for detecting the position of the pipe at various places, data communication means adapted for providing communication between the control part and motors, switches and/or valves that are used to regulate and control the various steps of the processes and/or data communication means adapted for providing communication between the control part and the sensors.

The method according to the invention of separating a pipe with the apparatus is described in the following. The pipe is placed on the conveyor unit 1 which moves a part, such as approximately 1.5 meters, into the separation region 2 that is located between the two pressing members 3, 5 each having a pressing surface 4, 6, respectively. The second pressing member 5 is moved towards the first pressing member 3 by means of the hydraulic pistons 7 until both pressing surfaces 4, 6 are in contact with the pipe. Then the pressing process begins in which the second pressing member 5 is pressed towards the first pressing member 3 by means of the hydraulic pistons 7 with a force of a magnitude sufficient to deform the pipe.

The inner tube, usually made from steel, of the pipe is during the pressing process permanently plastically deformed into a substantially flat member of which the original opening in the middle is substantially closed and the flat member obtains two substantially flat and substantially parallel sides. The outer, isolating layer of the pipe made from a foamed material is a brittle material that will break into smaller pieces and at least partly be crushed during the pressing process, whereby the outer layer is at least partially separated from the inner tube. The cells of the foamed material will, when the material is crushed, release their content of gasses that have been used as a blowing agent, such as CFC gasses. Therefore, the process is preferably performed at a temperature above to boiling temperature of the gasses so as to remove as much gas as possible from the foamed material during the pressing process.

The ventilator is activated during the pressing process so that gasses, such as CFC gasses, that may be released from the foamed material during the pressing process is sucked from the separation region 2 and out through the filtering means 16 in which a substantial part of the released gasses are captured.

Thereafter, the part of the tube that have been pressed is moved out of the separation region 2 and through the two parts 12, 13 of the cutting means as the next part of the pipe is placed in the separation region 2. The hydraulic piston 14 for moving the second part 13 of the cutting means is activated and the pressed part of the pipe is cut from the remaining, non-pressed part of the pipe and is moved by means of the conveyors 16, 17 to the sorting station.

The sheath that the pipe may be equipped with on the outer side of the outer layer will often be broken into smaller pieces during the pressing process. However, the sheath is easily separated from the outer layer and the inner tube after the cutting step even if the sheath is still in one piece. The sheath may optionally be subjected to a secondary separation process, e.g. by rolling the sheath between two cylinders, in order to loosen parts of the outer layer that may stick to the sheath.

Optionally, cutting means are provided for tubes having a hard sheath, so that the sheath prior to the pressing step is opened with one or two longitudinal cuts so as to ease the pressing process, allow gasses to escape from the foam and the ease the separation of the sheath part from the pipe and foam parts after the pressing process. The cuts may be applied manually or automatically by means of knives, circular saws, etc.

Optionally, loosening means are further applied to the inner tube for loosening parts of the outer layer that may stick to the inner tube after the pressing process have been performed.

The foamed material may after the sorting process be recycled or disposed in a number of ways, e.g. by being combusted in a combustion plant at such high temperature that a remaining content of CFC gasses are destroyed.

The gasses contained in the filtering means may be recovered or destroyed together with the filtering means.

## Claims

1. A method of separating a pipe comprising an inner tube and at least one outer layer comprising the steps of
• placing at least a part of the pipe between a first and a second pressing surface,
• approaching the two pressing surfaces towards each other until both pressing surfaces engage with the pipe, and
• pressing the two pressing surfaces further towards each other with a force of such magnitude that the pipe is deformed whereby the at least one outer layer of the pipe is separated from the inner tube due to differences in the mechanical properties of the outer layer and the inner tube wherein the inner tube in the pressing step is permanently deformed into a substantially flat member
• applying suction to the region where the separation process is performed so as to remove a substantial part of gasses that are released during the process,
• moving the pressing surfaces away from each other so as to release the pipe from the pressing surfaces,
• moving the part of the pipe that have been pressed away from the pressing surfaces,
• placing the pipe in cutting means, and
• cutting the pipe so as to separate the part of the pipe that have been pressed from the remaining part of the pipe.

2. A method according to claim 1, wherein the inner tube is a metal tube, such as a steel tube.

3. A method according to claim 1 or 2 and further comprising the step of passing the air that is sucked from the region where the separation process is performed through a filtering means so at to capture a substantial part of the gasses, that are released from the process and which are removed by suction, in the filtering means, so as to prevent the gasses from contaminating the environment.

4. A method according to any of the preceding claims and further comprising the step of loosening remaining parts of the at least one outer layer of the pipe from the inner tube by applying loosening means to the pipe.

5. A method according to claim 4, wherein the loosening means comprises two scrapers each comprising an edge and the loosening means are applied to the pipe by placing the edges of the scrapers on each side of the deformed inner tube abutting the tube sides where after the tube and the scrapers are moved relatively to each other.

6. A method according to claim 4, wherein the loosening means comprises brushes that may be rotated and the loosening means are applied to the pipe by rotating the brushes while the brushes are in contact with the part of the pipe that have been deformed so as to remove remaining parts of the at least one outer layer form the inner tube.

7. A method according to any of the preceding claims, wherein the outer layer of the pipe is at least partly made from a foamed material.

8. A method according to claim 7, wherein the foamed material comprises polyurethane.

9. A method according to claim 7 or 8, wherein the foamed material comprises a CFC gas which have been used as blowing agent and the gasses that may be released during the separation process comprises CFC gasses.

10. An apparatus for use in the method according to claim 1-9, the apparatus comprises
• a first pressing member having a first pressing surface,
• a second pressing member having a second pressing surface, the first and the second pressing surfaces being arranged during the separation process so that they substantially are facing each other,
• means adapted for moving the pressing members towards each other with a force of such a magnitude that a pipe placed between the pressing surfaces may be permanently deformed, and
• suction means for removing a substantial part of the gasses that may be released during the separation process from the region around the pressing surfaces, and
• cutting means suitable for separating a pressed part of a pipe from a non-pressed part of a pipe.

11. An apparatus according to claim 10 and comprising a filtering means connected to the outlet of the suction means, the filtering means being suitable for capturing a substantial part of the gasses that may be released during the separation process.

12. An apparatus according to claim 11, wherein the filtering means are suitable for capturing CFC gasses.

13. An apparatus according to any of claims 10-12 and comprising a housing enclosing the pressing members and to which the intake of the suction means is connected so as to increase the efficiency of the process of removing a substantial part of the gasses, that may be released during the separation process from the region around the pressing surfaces.

14. An apparatus according to any of claims 10-13 and comprising feeding means adapted for automatically feeding the pipe in between the pressing surfaces.

15. An apparatus according to any of claims 10-14 and comprising loosening means suitable for removing parts of the outer layer of the pipe from the inner tube after the pressing process.

16. An apparatus according to claim 16, wherein the loosening means comprises two scrapers each with an edge, means for placing the two scrapers one on each side of and abutting the pressed part of the inner tube and means for moving the scrapers and the inner tube relatively to each other.

17. An apparatus according to claim 16, wherein the loosening means comprises brushes, means for rotating the brushes, means for placing the brushes on each side of the pressed part of the inner tube and means for moving the brushes and the inner tube relatively to each other.

## Patentansprüche

1. Verfahren zum Trennen einer Rohrleitung, die ein inneres Rohr und mindestens eine äußere Schicht umfasst, welches Verfahren folgende Schritte umfasst
• Anbringen von mindstens einem Teil der Rohrleitung zwischen einer ersten und einer zweiten Pressoberfläche,
• Annähern der zwei Pressoverflächen aneinander, bis beide Pressoverflächen in die Rohrleitung eingreifen, und
• weiteres Zusammenpressen der beiden Pressoberflächen aneinander mit einer solchen Stärke, dass die Rohrleitung deformiert wird, wobei die mindestens eine äußere Schicht der Rohrleitung von dem inneren Rohr, aufgrund von Verschiedenheiten bei den mechanischen Eigenschaften der äußeren Schicht und des inneren Rohrs getrennt wird, wobei das innere Rohr während des Presssschritts dauerhaft in ein wesentlich flaches Element deformiert wird,
• Ansetzen einer Absaugung an dem Bereich, wo der Trennungsprozess durchgeführt wird, um einen wesentlichen Teil von Gasen, die während des Prozesses freigegeben werden, zu entfernen,
• Entfernen der Pressoberflächen voneinander, um die Rohrleitung von den Pressoberflächen zu befreien,
• Entfernen des Teils der Rohrleitung, der von den Pressoberflächen weggepresst worden ist,
• Anbringen der Rohrleitung in Schneideeinrichtungen, und
• Schneiden der Rohrleitung, um den Teil der Rohrleitung, der von dem verbleibenden Teil der Rohrleitung weggepresst worden ist, zu trennen.

2. Verfahren nach Anspruch 1, worin das innere Rohr ein Metalrohr, wie z.B. ein Stahlrohr, ist.

3. Verfahren nach Anspruch 1 oder 2, weiterhin umfassend die Stufe des Durchströmens der Luft durch eine Filtereinrichtung, wobei die Luft von dem Bereich, wo der Trennungsprozess durchgeführt wird, angesaugt wird, um einen wesentlichen Teil der Gase, die von dem Prozess freigegeben und durch Absaugung entfernt worden sind, in der Filtereinrichtung einzufangen, um zu vermeiden, dass die Gase die Umwelt verschmutzen.

4. Verfahren nach irgendeinem der vorhergehenden Ansprüche, weiterhin umfassend den Schritt des Lösens der verbleibenden Teile der mindestens einen äußeren Schicht der Rohrleitung von dem inneren Rohr durch Ansetzen von Löseeinrichtungen an der Rohrleitung.

5. Verfahren nach Anspruch 4, worin die Löseeinrichtungen zwei Schaber umfassen, die jeweils eine Kante haben und die Löseeinrichtungen durch Anbringen der Schaberkanten auf jede Seite des deformierten inneren Rohrs an der Rohrleitung angesetzt werden, wobei die Rohrseiten angelegen werden, wonach das Rohr und die Schaber im Verhältnis zueinander bewegt werden.

6. Verfahren nach Anspruch 4, worin die Löseeinrichtungen Bürsten umfassen, die gedreht werden können, und die Löseeinrichtungen an der Rohrleitung durch Drehen der Bürsten angesetzt werden, während die Bürsten im Kontakt mit dem Teil der Rohrleitung, der deformiert worden ist, sind, um die verbleibenden Teile der mindestens einen äußeren Schicht vom inneren Rohr zu entfernen.

7. Verfahren nach irgendeinem der vorhergehenden Ansprüche, worin die äußere Schicht der Rohrleitung mindestens teilweise aus Schaumstoff hergestellt ist.

8. Verfahren nach Anspruch 7, worin der Schaumstoff Polyurethan umfasst.

9. Verfahren nach Anspruch 7 oder 8, worin der Schaumstoff ein FCKW-Gas, das als Treibmittel verwendet worden ist, umfasst, und worin die Gase, die während des Trennungsprozesses freigegeben werden können, FCKW-Gase umfassen.

10. Vorrichtung zur Anwendung im Verfahren nach einem der Ansprüche 1-9, die umfasst
• ein erstes Presselement mit einer ersten Pressoberfläche,
• ein zweites Presselement mit einer zweiten Pressoberfläche, wobei die erste und die zweite Pressoberfläche während des Trennungsprozesses so angeordnet werden, dass sie im Wesentlichen einander gegenüberstehen,
• Einrichtungen, die dazu angepasst sind, die Presselemente gegeneinander mit einer solchen Stärke zu bewegen, dass eine Rohrleitung, die zwischen den Pressoberflächen angebracht ist, dauerhaft deformiert werden kann, und
• Absaugeeinrichtungen zur Entfernung eines wesentlichen Teils der Gase, die während des Trennungsprozesses vom Bereich um die Pressoberflächen herum freigegeben werden können, und
• Schneideeinrichtungen, die zur Trennung eines gepressten Teils einer Rohrleitung von einem nicht-gepressten Teil einer Rohrleitung geeignet sind.

11. Vorrichtung nach Anspruch 10, umfassend eine Filtereinrichtung, die mit dem Ausgang der Absaugeeinrichtung verbunden ist, wobei die Filtereinrichtung zum Einfangen eines wesentlichen Teils der Gase, die während des Trennungsprozesses freigegeben werden können, geeignet ist.

12. Vorrichtung nach Anspruch 11, worin die Filtereinrichtungen zum Einfangen von FCKW-Gasen geeignet sind.

13. Vorrichtung nach irgendeinem der Ansprüche 10-12, umfassend ein Gehäuse, das die Presselemente einschliesst, und mit welchem die Ansaugöffnung der Absaugeeinrichtung verbunden ist, um die Effizienz des Prozesses des Entfernens eines wesentlichen Teils der Gase, die während des Trennungsprozesses freigegeben werden können, vom Bereich um die Pressoberflächen herum, zu erhöhen.

14. Vorrichtung nach irgendeinem der Ansprüche 10-13, umfassend Zufuhreinrichtungen, die an die automatische Zufuhr der Rohrleitung zwischen den Pressoberflächen angepasst sind.

15. Vorrichtung nach irgendeinem der Ansprüche 10-14, umfassend Löseeinrichtungen, die zur Entfernung von Teilen der äußeren Schicht der Rohrleitung vom inneren Rohr nach dem Pressvorgang geeignet sind.

16. Vorrichtung nach Anspruch 16, worin die Löseeinrichtungen zwei Schaber, die jeweils eine Kante haben, Einrichtungen zum Anbringen der beiden Schaber auf jede Seite und zum Anliegen des gepressten Teils des inneren Rohrs und Einrichtungen zum Bewegen der Schaber und des inneren Rohrs im Verhältnis zueinander umfassen.

17. Vorrichtung nach Anspruch 16, worin die Löseeinrichtungen Bürsten, Einrichtungen zum Drehen der Bürsten, Einrichtungen zum Anbringen der Bürsten auf jede Seite des gepressten Teils des inneren Rohrs und Einrichtungen zum Bewegen der Bürsten und des inneren Rohrs im Verhältnis zueinander umfassen.

## Revendications

1. Procédé de séparation d'une conduite comprenant un tube intérieure et au moins une couche extérieure comprenant les étapes de
• placement d'au moins une partie de la conduite entre une première et une seconde surface de pressage,
• rapprochement des deux surfaces de pressage l'une vers l'autre jusqu'à leur engagement avec la conduite, et
• pressage ultérieure des deux surfaces de pressage l'une vers l'autre avec une force d'une telle magnitude que la conduite se déforme grâce à quoi la au moins une couche extérieure de la conduite est séparée du tube intérieure dû à des différences dans les propriétés mécaniques de la couche extérieure et du tube intérieure, dans lequel le tube intérieur dans l'étape de pressage est en permanence déformé en un membre essentiellement plat,
• application d'aspiration à la région où le procédé de séparation est effectué pour éliminer une partie essentielle des gaz dégagés pendant le procédé,
• éloignement des surfaces de pressage l'une de l'autre pour libérer la conduite des surfaces de pressage,
• éloignement de la partie de la conduite ayant été pressée des surfaces de pressage,
• placement de la conduite dans des moyens coupants, et
• coupure de la conduite pour séparer la partie de la conduite ayant été soumise au pressage de la partie restante de la conduite.

2. Procédé selon la revendication 1, dans lequel le tube est un tube métallique, tel qu'un tube d'acier.

3. Procédé selon la revendication 1 ou 2, comprenant en outre une étape de passage de l'air aspiré de la région dans laquelle est effectué le procédé, par des moyens de filtration pour capter une partie essentielle des gaz qui sont dégagés du procédé, et qui sont éliminés par aspiration dans les moyens de filtration pour empêcher les gaz de contaminer l'environnement.

4. Procédé selon l'une quelconque des revendications précédentes, comprenant en outre une étape de relâchement des parties restantes de la au moins une couche extérieure de la conduite du tube intérieur par application de moyens de relâchement à la conduite.

5. Procédé selon la revendication 4, dans lequel les moyens de relâchement comprennent deux racleurs comprenant chacun un bord, et les moyens de relâchement sont appliqués à la conduite par le placement des bords des racleurs sur chaque côté du tube intérieur déformé en reposant sur les côtés du tube, après quoi le tube et les racleurs sont déplacés relativement l'un par rapport à l'autre.

6. Procédé selon la revendication 4, dans lequel les moyens de relâchement comprennent des balais qui peuvent être tournés, et les moyens de relâchement sont appliqués à la conduite par rotation des balais, les balais étant en contact avec la partie de la conduite ayant été déformée pour enlever des parties restantes de la au moins une couche extérieure du tube intérieur.

7. Procédé selon l'une quelconque des revendications précédentes, dans lequel la couche extérieure de la conduite est au moins partiellement produit à partir d'un matériau moussé.

8. Procédé selon la revendication 7, dans lequel le matériau moussé comprend du polyuréthane.

9. Procédé selon la revendication 7 ou 8, dans lequel le matériau moussé comprend un gaz CFC qui a été utilisé comme gonflant, et les gaz qui peuvent être dégagés pendant le procédé de séparation comprennent des gaz CFC.

10. Appareil pour l'utilisation dans le procédé selon la revendication 1 à 9, l'appareil comprenant
• un premier membre de pressage ayant une première surface de pressage,
• un second membre de pressage ayant une seconde surface de pressage, la première et la seconde surfaces de pressage étant arrangées pendant le procédé de séparation de façon à ce qu'elles soient essentiellement face à face,
• des moyens adaptés au déplacement des membres de pressage l'un vers l'autre avec une force d'une telle magnitude que la conduite placée entre les surfaces de pressage peut être déformée en permanence, et
• des moyens d'aspiration pour l'élimination d'une partie essentielle des gaz qui peuvent être dégagés pendant le procédé de séparation de la région autour des surfaces de pressage, et
• des moyens coupants convenables à la séparation d'une partie pressée d'une conduite d'une partie non-pressée d'une conduite.

11. Appareil selon la revendication 10, comprenant des moyens de filtration connectés à la sortie des moyens d'aspiration, les moyens de filtration étant appropriés à la capture d'une partie essentielle des gaz qui peuvent être dégagés pendant le procédé de séparation.

12. Appareil selon la revendication 11, dans lequel les moyens de filtration sont convenables pour la capture de gaz CFC.

13. Appareil selon l'une quelconque des revendications 10 à 12, comprenant un carter enfermant les membres de pressage et auquel l'orifice d'aspiration des moyens d'aspiration est connecté pour augmenter l'efficacité du procédé d'élimination d'une partie essentielle des gaz qui peuvent être dégagés pendant le procédé de séparation de la région autour des surfaces de pressage.

14. Appareil selon l'une quelconque des revendications 10 à 13, comprenant des moyens d'alimentation adaptés à une alimentation automatique de la conduite entre les surfaces de pressage.

15. Appareil selon l'une quelconque des revendications 10 à 14, comprenant des moyens de relâchement appropriés pour enlever des parties de la couche extérieure de la conduite du tube intérieur après le procédé de pressage.

16. Appareil selon la revendication 16, dans lequel les moyens de relâchement comprennent deux racleurs avec un bord chacun, des moyens de placement des deux racleurs un de chaque côté du tube intérieur et en butée contre la partie pressé du tube intérieur et des moyens de déplacement des racleurs et du tube intérieur relativement l'un par rapport à l'autre..

17. Appareil selon la revendication 16, dans lequel les moyens de relâchement comprennent des balais, des moyens de rotation des balais, des moyens de placement des balais de chaque côté de la partie pressé du tube intérieur et des moyens d'enlèvement des balais et du tube intérieur relativement l'un apport à l'autre.
